# EUROPÄISCHE PATENTSCHRIFT

(11) **EP 0 791 408 B1**
(45) Veröffentlichungstag und Bekanntmachung des Hinweises auf die Patenterteilung: **15.09.1999**
(21) Anmeldenummer: 96119923.9
(22) Anmeldetag: 12.12.1996
(51) Int. Cl.: B08B 3/02

(54) **Vorrichtung zum Ausbringen von Fremdkörpern, z.B. Bearbeitungsspänen, aus einem Hohlraum eines Maschinenteils.**
Device for removing foreign objects, especially machine chips, from a cavity in a work piece.
Dispositif pour enlever des corps étrangers, notamment copeaux, d'une cavité d'une piece de machine.

(30) Priorität: 20.02.1996 DE 19606156
(43) Veröffentlichungstag der Anmeldung: 27.08.1997
(73) Patentinhaber: Bayerische Motoren Werke Aktiengesellschaft, 80788 München (DE)
(72) Erfinder: Dichler, Josef, 4400 Steyr (AT); Pieringer, Johann, 4431 Haidershofen (AT)

(56) Entgegenhaltungen:
- DE-A- 2 823 146
- DE-A- 2 922 213
- DE-A- 3 000 815
- GB-A- 2 024 363
- GB-A- 2 166 213
- US-A- 5 419 352

## Beschreibung

Die Erfindung geht gemäß dem Oberbegriff des Patentanspruches 1 von der GB-A 2 166 213 aus.

Dieses Dokument beschreibt ein Verfahren und eine Vorrichtung zum Entfernen von Spänen und sonstigen bei einem spanabhebenden Bearbeitungsvorgang anfallenden Fremdkörpern aus einem Hohlraum eines Maschinenteils. Bei diesem Verfahren wird mit der beschriebenen Vorrichtung der Hohlraum abschnittsweise während einer vorbestimmten Intervalldauer gespült.

Nachteilig bei dieser bekannten Vorrichtung ist neben dem erheblichen Bauaufwand, daß das Spülverfahren zur sicheren Entfernung der Fremdkörper relativ unflexibel ist.

Der Erfindung liegt die Aufgabe zugrunde, eine verbesserte Vorrichtung zum Ausbringen von Fremdkörpern aus einem zerklüfteten Hohlraum eines Maschinenteils aufzuzeigen.

Diese Aufgabe ist mit dem Patentanspruch 1 gelöst. Die erfindungsgemäße Vorrichtung ist in vorteilhafter Weise im Aufbau gegenüber dem aufgezeigten Stand der Technik wesentlich einfacher. In weiterer vorteilhafter Weise ermöglicht sie auch ein flexibleres Spül-Verfahren dahingehend, daß bei einem Arbeitszyklus ein gasförmiges und/oder flüssiges Spül-Medium intermittierend in den Hohlraum mit wechselnder Richtung und vorbestimmter Intervalldauer eingebracht werden kann.

Dieser vorbeschriebene, dynamische Spül-Vorgang ist zwar per se aus der DE-A 30 00 815 für ein Bohrungssystem in einem Maschinenteil bekannt, jedoch mit dem als eine Zylinder-/Kolben-Einheit gestalteten Verteiler mit erfindungsgemäß - zwischen Doppelkolben einer hohlen Kolbenstange zugeführtem Spül-Medium für relativ große, zerklüftete Hohlräume mit einem relativ geringen Vorrichtungs-Aufwand vorteilhaft einfach verwirklicht.

Vorzugsweise dient als Medium Druckluft, die dem Hohlraum bzw. Kühlmittelraum eines Zylinderkopfes zur wirksamen Fremdkörper-Entfernung während mehrerer Arbeitszyklen in entgegengesetzten Richtungen abschnittsweise nacheinander zugeführt wird. Mit dieser zeitweiligen bzw. intervallmäßigen Beaufschlagung jedes Hohlraum-Abschnittes mit Druckluft in zyklusbedingt entgegengesetzten Richtungen werden in vorteilhafter Weise zumindest alle losen Fremdkörper ausgebracht.

Mit der Vorrichtung ist es in vorteilhafter Weise möglich, bei konstanter Druckluftzufuhr über einen Verteiler jeden Hohlraum-Abschnitt arbeitszyklusabhängig nacheinander in der einen und anschließend in der anderen Richtung intervallmäßig zu beaufschlagen mit zeitweiliger Unterbrechung der Druckluftzufuhr zu den übrigen Hohlraum-Abschnitten.

Dies ist in baulich einfacher und robuster Ausführung mit einem Verteiler erreicht, der als eine Zylinder-/Kolben-Einheit gestaltet ist, wobei der Zylinder mit entsprechend einer vorbestimmten Reihenfolge der Hohlraum-Abschnitte in Hubrichtung eines Doppelkolbens beabstandet angeordnete Anschlußstellen für Zuführeinrichtungen zu den Hohlraum-Durchbrechungen aufweist, wobei der Doppelkolben zumindest entsprechend der Querschnittserstreckung einer Anschlußstelle in Hubrichtung fest beabstandete Einzelkolben aufweist, zwischen die das Medium, insbesondere Druckluft, über eine hohle Kolbenstange zum arbeitszyklischen Hubantrieb des Doppelkolbens über eine steuer-/regelbare Antriebseinheit eingebracht ist.

Mit der vorbeschriebenen Vorrichtung sind bei einem je Arbeitszyklus gleichmäßig oszillierend angetriebenen Doppelkolben die Intervalle je Hohlraum-Abschnitt zur Beaufschlagung bzw. Spülung mit Druckluft gleich groß gewählt. Die Intervalle können aber auch entsprechend dem Ausmaß der Zerklüftung des Hohlraumes in ihrer Dauer durch einen gemäß einem Steuer-/Regelprogramm ungleichmäßig oszillierend angetriebenen Doppelkolben angepaßt sein.

Schließlich ist mit der konstanten Mediumszuführung zwischen den beiden Einzelkolben über die hohle Kolbenstange bei etwa um das feste Abstandsmaß der Einzel-Kolben gegeneinander versetzt angeordneten Anschlußstellen ein in der jeweiligen Hubrichtung fortschreitender Druck- und Mengenübergang zwischen zwei benachbarten Hohlraum-Abschnitten erzielt mit dem Vorteil einer den Fremdkörpern aufgeprägten Bewegungsrichtung zur Ausbringung aus dem Hohlraum.

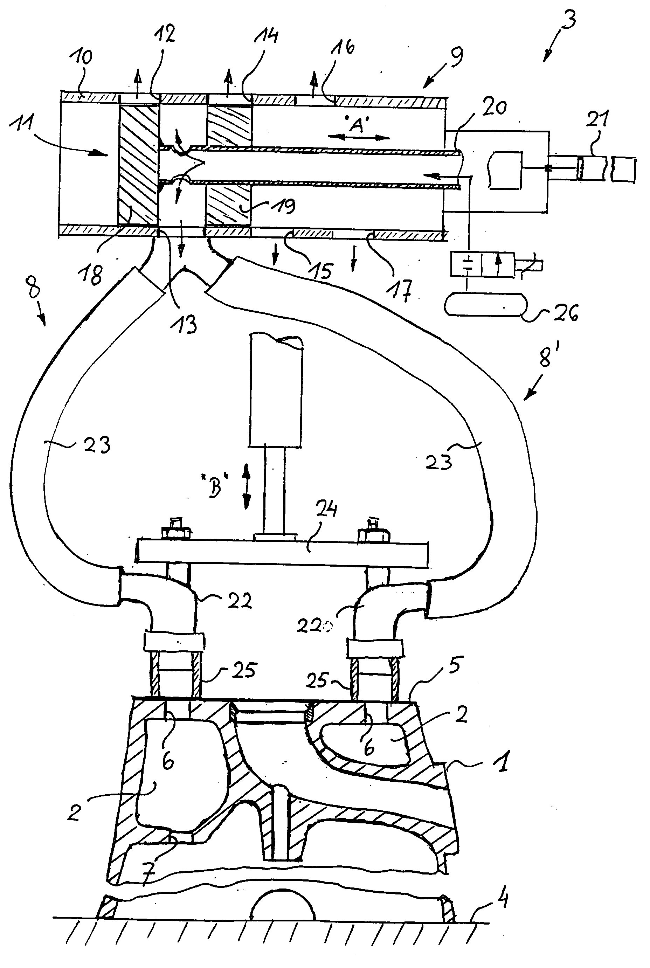

Die Erfindung ist anhand einer in der Zeichnung schematisch dargestellten Vorrichtung zum Ausbringen von Fremdkörpern aus einem Hohlraum eines bevorzugten Maschinenteils beschrieben.

Zum Ausbringen von Spänen und sonstigen Fremdkörpern nach Abschluß der spanabhebenden Bearbeitung eines flüssigkeitsgekühlten Zylinderkopfes 1 einer nicht gezeigten, mehrzylindrigen Brennkraftmaschine aus dem Kühlmittelraum 2 des Zylinderkopfes 1 dient eine Vorrichtung 3. Diese umfaßt eine nicht näher dargestellte Fixierplatte 4 für eine deckelseitige Auflage des Zylinderkopfes 1, der in seiner maschinenseitigen Bodenplatte 5 der Zuleitung eines Brennkraftmaschinen-Kühlmittels dienende Durchbrechungen 6 zum Kühlmittelraum 2 aufweist. Eine weitere, zunächst offene Durchbrechung ist mit 7 bezeichnet. Eine weitere offene Durchbrechung ist zumindest in einem Endabschnitt des Zylinderkopfes vorgesehen.

Die in Anwendung kommende Spülung mit intermittierend in den Kühlmittelraum 2 des Zylinderkopfes 1 mit wechselnder Richtung und vorbestimmter Intervalldauer eingebrachte Druckluft je Arbeitszyklus ist erfindungsgemäß dadurch verbessert, daß der zerklüftete Kühlmittelraum 2 je Arbeitszyklus von einem Endbereich im Zylinderkopf 1 zum anderen Endbereich und gegebenenfalls umgekehrt jeweils abschnittsweise nacheinander beaufschlagt wird.

Zur Durchführung dieses Spülvorganges weist die Vorrichtung 3 für jede Hohlraumdurchbrechung 6 in der Bodenplatte 5 des Zylinderkopfes 1 eine Zuführeinrichtung 8, 8' für die Druckluft auf. Sämtliche Zuführeinrichtungen 8, 8' stehen mit einem Verteiler 9 in Verbindung, mit dem die Druckluft nacheinander z.B. den maschinenzylinder-bzw. brennraumbezogenen Hohlraum-Abschnitten über die Zuführeinrichtungen 8, 8' zuleitbar ist.

Der Verteiler 9 ist als eine Zylinder-/Kolben-Einheit gestaltet, wobei der Verteilerzylinder 10 mit entsprechend einer vorzugsweise gemäß den sechs Zylindern einer Reihen-Brennkraftmaschine vorgesehenen Reihenfolge der Hohlraum-Abschnitte in Hubrichtung eines Doppelkolbens 11 beabstandet angeordnete Anschlußstellen 12 mit 17 aufweist. Die beispielsweise in der Zeichnung aufgesteuert gezeigte Anschlußstelle 13 versorgt über die Zuführeinrichtungen 8, 8' den dem zweiten Maschinenzylinder zugeordneten Abschnitt im Kühlmittelraum 2 des Zylinderkopfes 1. Die Anschlußstelle 12 versorgt den Hohlraum-Abschnitt des ersten Maschinenzylinders und die Anschlußstelle 14 den Hohlraum-Abschnitt des dritten Maschinenzylinders usw.

Wie aus der Zeichnung ersichtlich, umfaßt der Doppelkolben 11 entsprechend der Querschnittserstreckung jeder Anschlußstelle 12 mit 17 in Hubrichtung gemäß Pfeil "A" fest beabstandete Einzelkolben 18, 19, zwischen die das Medium, z.B. die Druckluft, über eine hohle Kolbenstange 20 eingebracht wird, die mit einer steuer-/regelbaren Antriebseinheit 21 zum arbeitszyklischen Hubantrieb des Hubkolbens 11 in Verbindung steht.

Zur Erzielung beispielsweise gleichmäßiger Spülintervalle bei gleichmäßig oszillierend angetriebenem Doppelkolben 11 sind die Anschlußstellen 12 mit 17 gegeneinander um das feste Abstandsmaß der Einzelkolben 18, 19 des Doppelkolbens 11 versetzt angeordnet. Wie aus der einzigen Figur ersichtlich, kann eine oder jede der Anschlußstellen 12 mit 17 der Versorgung mehrerer, einem Hohlraum-Abschnitt zugeordneter Zuführeinrichtungen 8, 8' dienen, wobei Zuführeinrichtungen 8, 8' gegebenenfalls diametral entgegengesetzt mit einem jeweiligen Hohlraum-Abschnitt, insbesondere durch Einbauten unterteilten Hohlraum-Abschnitt in Verbindung stehen. Im übrigen kann bei sehr unterschiedlich gestalteten bzw. zerklüfteten Hohlraum-Abschnitten der Doppelkolben 11 des Verteilers 9 gemäß einem Steuer-/Regelprogramm ungleichmäßig oszillierend angetrieben sein für den unterschiedlichen Hohlraum-Abschnitten entsprechend angepaßte Spül-Intervalle. Vorteilhaft ist hierbei für den Kühlmittelraum 2 jedes Zylinderkopfes 1 mehrere Arbeitszyklen in entgegengesetzten Richtungen vorzusehen.

In einer vorteilhaften Ausgestaltung der Vorrichtung 3 umfaßt jede Zuführeinrichtung 8, 8' zwischen dem Verteiler 9 und einem Winkelstück 22 einen elastischen Schlauch 23, wobei die Schläuche 23 die Möglichkeit eröffnen, eine der Fixierung der Winkelstücke 22 dienende Grundplatte 24 über der Bodenplatte 5 des Zylinderkopfes 1 hubbeweglich gemäß Pfeil "B" anzuordnen. An jedem Winkelstück 22 elastisch nachgiebig angeordnete Rohrstücke 25, z.B. aus elastischen Schlauchabschnitten gebildet, dienen der dichten Anlage über der jeweiligen Durchbrechung 6 auf der Bodenplatte 5 des Zylinderkopfes 1.

Die Druckluft kann z.B. aus einem Vorratsbehälter 26 ventilgesteuert in die hohle Kolbenstange 20 eingeführt werden.

Im Rahmen der Erfindung ist auch ein kombiniertes Verfahren denkbar, bei dem zuerst ein zerklüfteter Hohlraum eines Maschinenteils mit einem flüssigen Medium erfindungsgemäß gespült und anschließend mit Druckluft erfindungsgemäß ausgeblasen wird.

## Patentansprüche

1. Vorrichtung zum Ausbringen von Fremdkörpern aus einem Hohlraum eines Maschinenteils, insbesondere Späne aus einem Zylinderkopf,
- umfassend mit ersten, mit dem Hohlraum (2) verbundene Durchbrechungen (6) des Maschinenteils (1) gesteuert verbindbare Zuführeinrichtungen (8, 8') für ein gasförmiges und/oder flüssiges Spül-Medium, das
- einem zerklüfteten Hohlraum (2) in einem mittels einer weiteren Einrichtung (9) bewirkten Arbeitszyklus von einem Endbereich zum anderen jeweils abschnittsweise nacheinander zugeführt und über zweite Durchbrechungen (7) im Maschinenteil (1) abgeführt ist,
dadurch gekennzeichnet,
- daß die Zuführeinrichtungen (8, 8') mit der als ein Verteiler (9) gestalteten weiteren Einrichtung verbunden sind, und
- der Verteiler (9) als eine Zylinder-/Kolben-Einheit gestaltet ist, wobei
- der Verteilerzylinder (10) mit entsprechend einer vorbestimmten Reihenfolge der Hohlraum-Abschnitte in Hubrichtung eines Doppelkolbens (11) beabstandet angeordnete Anschlußstellen (12 - 17) aufweist, und
- der Doppelkolben (11) zumindest entsprechend der Querschnittserstreckung einer Anschlußstelle (12 - 17) in Hubrichtung fest beabstandete Einzelkolben (18, 19) aufweist, zwischen die
- das Spül-Medium über eine hohle Kolbenstange (20) zum arbeitszyklischen Hubantrieb des Doppelkolbens (11) über eine steuer/regelbare Antriebseinheit (21) in den Hohlraum (2) eingebracht ist.

2. Vorrichtung nach Anspruch 1, dadurch gekennzeichnet, daß die Kolbenstange (20) in einem Arbeitszyklus mittels der Antriebseinheit (21) gemäß einer intermittierenden Zufuhr des Spül-Mediums in den Hohlraum (2) mit wechselnder Richtung und vorbestimmter Intervalldauer angetrieben ist.

3. Vorrichtung nach Anspruch 1 und 2, dadurch gekennzeichnet,
- daß die Anschlußstellen (12 - 17) gegeneinander um das feste Abstandsmaß der Einzelkolben (18, 19) des Doppelkolbens (11) versetzt angeordnet sind, und
- daß Anschlußstellen (12 - 17) der Versorgung mehrerer, einem Hohlraum-Abschnitt zugeordneter Zuführeinrichtungen (8, 8') dienen, wobei
- Zuführeinrichtungen (8, 8') gegebenenfalls diametral entgegengesetzt mit einem jeweiligen Hohlraum-Abschnitt in Verbindung stehen.

4. Vorrichtung nach den Anspruchen 1 and 3, dadurch gekennzeichnet,
- daß jede Zuführeinrichtung (8, 8') zwischen dem Verteiler (9) und einem Winkelstück (22) einen elastischen Schlauch (23) umfaßt, wobei
- jedes an einer hubbeweglich angeordneten Grundplatte (24) fixierte Winkelstück (22) über ein elastisch nachgiebig angeordnetes Rohrstück (25) über der jeweiligen Durchbrechung (6) auf dem Maschinenteil (Zylinderkopf 1) dicht aufliegt.

5. Vorrichtung nach den Ansprüchen 1 bis 4 gekennzeichnet durch die Verwendung für einen flüssigkeitsgekühlten Zylinderkopf (1) einer mehrzylindrigen Brennkraftmaschine, wobei der Kühlmittelraum (2) des Zylinderkopfes (1) der von Fremdkörpern freizumachende Hohlraum ist.

6. Vorrichtung nach Anspruch 5, dadurch gekennzeichnet, daß je Zylinderkopf (1) mehrere Arbeitszyklen (z.B. pro Zeiteinheit) vorgesehen sind.

7. Vorrichtung nach den Ansprüchen 1 bis 6 dadurch gekennzeichnet, daß als Medium Druckluft verwendet ist.

8. Vorrichtung nach Anspruch 6, dadurch gekennzeichnet, daß der Doppelkolben (11) in dem Verteilerzylinder (10) des Verteilers (9) bei einem Arbeitszyklus gleichmäßig bewegt, insbesondere oszillierend angetrieben ist.

9. Vorrichtung nach einem oder mehreren der Ansprüche 2 bis 7, dadurch gekennzeichnet, daß der Doppelkolben (11) gemäß einem Steuer/Regelprogramm der Antriebseinheit (21) ungleichmäßig bewegt, insbesondere oszillierend angetrieben ist.

## Claims

1. A device for removing foreign bodies from a cavity in a machine part, especially chips from a cylinder head, comprising:
- supply means (8, 8') for connecting in controlled manner to first apertures (6) in the machine part (1) connected to the cavity (2), the means supplying a gaseous and/or liquid washing or scavenging medium which
- is supplied to successive portions of a fissured cavity (2) from one end region to the other in a working cycle effected by an additional means (9) and discharged through second apertures (7) in the machine part (1),
characterised in that
- the supply means (8, 8') are connected to the additional means, which is in the form of a distributor (9), and
- the distributor (9) is a cylinder/piston unit, wherein
- the distributing cylinder (10) has connecting places (12 - 17) spaced apart in accordance with a predetermined sequence of cavity portions in the stroke direction of a double piston (11) and
- the double piston (11) comprises individual pistons (18, 19) with a fixed spacing in the stroke direction at least equal to the cross-sectional extent of a connecting-place (12 - 17), and between the pistons
- the washing or scavenging medium is introduced into the cavity (2) through a hollow piston rod (20) to drive the double piston (11) in reciprocation during each working cycle via an open-loop or closed-loop controllable drive unit (21).

2. A device according to claim 1, characterised in that in each working cycle the piston rod (20) is driven by the drive unit (21) in alternating directions and for predetermined intervals so as intermittently to supply the washing or scavenging medium to the cavity (2).

3. A device according to claims 1 and 2, characterised in that
- the connecting places (12 - 17) are spaced apart by the fixed spacing between the individual pistons (18, 19) in the double piston (11), and
- the connecting places (12 - 17) are for supplying a number of supply means (8, 8') associated with a cavity portion, wherein
- if required, diametrically opposite supply means (8, 8') are connected to a respective cavity portion.

4. A device according to claims 1 to 3, characterised in that
- each supply means (8, 8') comprises an elastic tube (23) between the distributor (9) and an angle member (22), wherein
- each angle member (22), fastened to a baseplate (24) disposed so as to move with the stroke, bears in sealing-tight manner on the machine part (cylinder head 1) over the respective aperture (6), via an elastically resiliently disposed pipe portion (25).

5. A device according to claims 1 to 4, characterised by use for a liquid-cooled cylinder head (1) of a multi-cylinder internal combustion engine, the coolant chamber (2) of the cylinder head (1) being the cavity which is to be freed from foreign bodies.

6. A device according to claim 5, characterised in that a number of working cycles (e.g. per unit time) are provided for each cylinder head (1).

7. A device according to claims 1 to 6, characterised in that the medium used is compressed air.

8. A device according to claim 6, characterised in that the double piston (11) is moved in uniform manner, especially in reciprocation, during each working cycle in the distributing cylinder (10) of the distributor (9).

9. A device according to one or more of claims 2 to 7, characterised in that the double piston (11) is driven non-uniformly, especially in reciprocation, in accordance with an open-loop or closed-loop control program for the drive unit (21).

## Revendications

1. Dispositif servant à enlever des corps étrangers d'une cavité d'une pièce de machine, en particulier des copeaux à partir d'une culasse, comprenant des dispositifs d'arrivée (8, 8') que l'on peut relier, de façon commandée, aux premiers ajours (6) de la pièce de machine (1) qui sont reliés à la cavité (2), pour un agent de rinçage se présentant sous la forme gazeuse et/ou liquide, qui est amené à une cavité (2) fissurée au cours d'un cycle de travail, provoqué au moyen d'un autre dispositif (9) d'une zone terminale à l'autre, respectivement par sections, les unes après les autres, et qui est évacué via deux ajours (7) pratiqués dans la pièce de la machine,
caractérisé en ce que
· les dispositifs d'arrivée (8, 8') sont reliés à l'autre dispositif qui est constitué sous la forme d'un distributeur (9),
· le distributeur (9) est constitué sous la forme d'un vérin,
· le cylindre du distributeur (10) présentant des points de raccordement (12 à 17) qui sont disposés à une certaine distance les uns des autres avec une série prédéterminée en conséquence de sections de cavité dans le sens de la course d'un piston double (11), et
le piston double (11) présente au moins des pistons individuels (18, 19) situés à une distance fixe les uns des autres en fonction de l'étendue de la section transversale d'un point de raccordement (12 à 17) dans le sens de la course, pistons individuels entre lesquels le fluide de rinçage est introduit dans la cavité (2) en sens alterné et pendant un intervalle de temps de durée prédéterminée, via une tige creuse de piston (20) pour entraîner de façon cyclique le piston double (11) au moyen d'une unité d'entraînement (21), que l'on peut commander et/ou régler.

2. Dispositif selon la revendication 1,
caractérisé en ce que
la tige de piston (20) est entraînée pendant un cycle de travail au moyen de l'unité d'entraînement (21), selon une arrivée intermittente du fluide de rinçage dans la cavité (2) en sens alterné et à des intervalles de temps de durée prédéterminée.

3. Dispositif selon la revendication 1 et la revendication 2,
caractérisé en ce que
· les points de raccordement (12 à 17) sont disposés de façon décalée les uns par rapport aux autres de la valeur fixe de l'écartement des différents pistons (18, 19) du piston double (11).
· les points de raccordement (12 à 17) servent à l'alimentation de plusieurs dispositifs d'arrivée (8, 8'), associés à une section de cavité,
· les dispositifs d'arrivée (8, 8') étant le cas échéant en liaison de façon diamétralement opposée avec une section correspondante de cavité.

4. Dispositif selon les revendications 1 à 3,
caractérisé en ce que
· chaque dispositif d'arrivée (8, 8') comprend entre le distributeur (9) et une pièce angulaire (22) un tuyau élastique (23),
· chaque pièce angulaire (22) qui est fixée sur une plaque de base (24) disposée de façon à pouvoir se soulever, repose de façon étanche au moyen d'une pièce tubulaire (25) qui est disposée de façon élastiquement flexible, sur l'ajour correspondant (6) pratiqué sur la pièce du moteur (culasse 1).

5. Dispositif selon les revendications 1 à 4,
caractérisé en ce qu'
on utilise pour une culasse (1), refroidie par un liquide, d'un moteur à combustion interne à plusieurs cylindres, la chambre (2) pour le moyen de refroidissement de la culasse (1) étant la cavité à libérer de corps étrangers.

6. Dispositif selon la revendication 5,
caractérisé en ce que
pour chaque culasse (1) il est prévu plusieurs cycles de travail (par exemple par unité de temps).

7. Dispositif selon les revendications 1 à 6,
caractérisé en ce qu'
on utilise comme fluide de l'air comprimé.

8. Dispositif selon la revendication 6,
caractérisé en ce que
le piston double (11) est entraîné en particulier de manière oscillante, en se déplaçant de façon uniforme dans le cylindre (10) du distributeur (9) lors d'un cycle de travail.

9. Dispositif selon l'une ou plusieurs des revendications 2 à 7,
caractérisé en ce que le piston double (11) est entraîné en particulier de manière oscillant, en se déplaçant de façon irrégulière selon un programme de commande et/ou de réglage de l'unité d'entraînement (21).
